Europäisches Patentamt

European Patent Office

Office européen des brevets

(19)

(11) Veröffentlichungsnummer: **0 017 953**
**B1**

(12) # EUROPÄISCHE PATENTSCHRIFT

(45) Veröffentlichungstag der Patentschrift·
20.10.82

(21) Anmeldenummer: 80101999.3

(22) Anmeldetag: 14.04.80

(51) Int. Cl.³: **H 02 G 15/072**, H 02 G 15/06

(54) Garnitur für das Ende eines Mittelspannungs- oder Hochspannungskabels.

(30) Priorität: 14.04.79 DE 2915369
17.07.79 DE 2928727
25.10.79 DE 2943080

(43) Veröffentlichungstag der Anmeldung:
29.10.80 Patentblatt 80/22

(45) Bekanntmachung des Hinweises auf die Patenterteilung:
20.10.82 Patentblatt 82/42

(84) Benannte Vertragsstaaten:
AT BE CH FR GB IT LI NL SE

(56) Entgegenhaltungen:
DE-A-1 690 465
DE-C-421 772
FR-A-1 248 520
GB-A-924 861
GB-A-959 739
NL-A-293 994
US-A-1 788 873
US-A-1 856 122
US-A-3 617 606
US-A-3 710 247

(73) Patentinhaber: Karl Pfisterer Elektrotechnische
Spezialartikel GmbH & Co. KG, Augsburger Strasse 375,
D-7000 Stuttgart 60 (DE)

(72) Erfinder: Kries, Werner, Zugernbergstrasse 28,
D-7056 Weinstadt 3 (DE)
Erfinder: Schuster, Martin, Heidestrasse 51,
D-7300 Esslingen (DE)
Erfinder: Dalferth, Günther, Bächlenweg 26,
D-7000 Stuttgart 61 (DE)

(74) Vertreter: Patentanwälte Dr. Wolff, H. Bartels
Dipl.-Chem. Dr. Brandes Dr.-Ing. Held, Dipl.-Phys. Wolff.
Lange Strasse 51, D-7000 Stuttgart 1 (DE)

## Garnitur für das Ende eines Mittelspannungs- oder Hochspannungskabels

Die Erfindung betrifft eine Garnitur für das Ende eines Mittelspannungs- oder Hochspannungskabels mit einem das Kabel umfassenden Isolierkörper, der eine gegenüber einem gegebenenfalls vorhandenen Deflektor elektrisch isolierte, ringförmig ausgebildete Elektrode für den Anschluss einer Prüf- oder Überwachungseinrichtung enthält.

Es ist bei Kabeldurchführungen und Kabelendverschlüssen bekannt (DE-C-421 772, US-A-1 788 873, US-A-1 856 122, US-A-3 710 247), eine dem Anschluss einer Prüf- oder Überwachungseinrichtung dienende Elektrode als einen den Leiter, dessen Spannungszustand geprüft oder überwacht werden soll, im Abstand umgebenden Ring oder eine Hülse auszubilden und diese Elektrode an der Innenmantelfläche oder der Aussenmantelfläche des Isolators der Durchführung oder des Endverschlusses anzuordnen. In vielen Fällen kann jedoch eine derartige Elektrodenanordnung nicht in Betracht gezogen werden. Dies gilt auch für einen anderen bekannten Kabelendverschluss (GB-A-959 739), bei dem die Ringelektrode an einer Stufe eines Isolators anliegt, die am Übergang von einem Abschnitt, der an der Kabelisolation anliegt, und einem Abschnitt gebildet wird, der das Kabel im Abstand umgibt. Es ist ferner bei Kabelendverschlüssen und Durchführungen bekannt (GB-A-924 861, NL-A-293 994, DE-A-1 690 465, US-A-3 710 247, FR-A-1 248 520), die ringförmige Elektrode in den das Kabel umgebenden Isolierkörper in einer das Kabel umfassenden Lage vollständig einzubetten. Eine derartige «schwimmende» Anordnung einer Ringelektrode in einem Isolierkörper ist jedoch technisch schwierig, weil keine Möglichkeit besteht, die Ringelektrode während des Herstellungsvorgangs des Isolierkörpers in der gewünschten Position zu halten.

Der Erfindung liegt daher die Aufgabe zugrunde, eine Garnitur der eingangs genannten Art zu schaffen, welche sowohl für Kabelstecker als auch für Endverschlüsse brauchbar ist und ohne Fertigungsprobleme mit einer in den Isolierkörper eingebetteten Ringelektrode ausgerüstet werden kann, um mit einfachen Mitteln und ohne die Wirkung eines gegebenenfalls vorhandenen Deflektors zu beeinträchtigen, eine Kontrolle, Überprüfung oder Überwachung des Betriebszustandes des Kabels oder anderer Kenngrössen, wie z.B. der Phasenlage der Spannung, zu ermöglichen.

Diese Aufgabe löst eine Garnitur der eingangs genannten Art, bei der erfindungsgemäss die Elektrode in einer von einer Ringschulter des Isolierkörpers aus in Längsrichtung eines zentralen Längskanals in den Isolierkörper eindringenden Nut liegt.

Die Anordnung der Elektrode in einer Ringnut, die von einer Ringschulter des Isolierkörpers aus in Längsrichtung des zentralen Längskanals in den Isolierkörper eindringt, ermöglicht es nicht nur, die Elektrode nachträglich einzusetzen, sondern sie auch in einfacher Weise während des Fertigungsvorgangs des Isolierkörpers in der richtigen Lage zu halten und bereits bei der Herstellung des Isolierkörpers in diesen einzubetten. Dies ist vor allem dann ein erheblicher Vorteil, wenn der Isolierkörper aus Silikonkautschuk od. dgl. hergestellt wird. Bei einer solchen Anordnung der Elektrode ist es auch ohne weiteres möglich, den Innendurchmesser der Elektrode grösser als den grössten Aussendurchmesser des Deflektors zu wählen.

Selbstverständlich ist eine derartige Anordnung der Elektrode auch dann vorteilhaft, wenn die Garnitur keinen Deflektor aufweist.

Vorzugsweise wird die Elektrode durch eine elektrisch leitende Schicht gebildet, die an der Wandung der Nut anliegt, weil eine solche Beschichtung fertigungstechnisch günstig ist. Es ist dabei vorteilhaft, die Elektrode zwischen der Wandung der Ringnut und einem die Ringnut zumindest teilweise ausfüllenden Ringkörper vorzusehen, dessen Querschnittsform an die Querschnittsform der Ringnut angepasst ist. Die Elektrode ist hierdurch geschützt, und vor allem kann die sie bildende, leitende Schicht auf den Ringkörper aufgebracht werden, was fertigungstechnisch einfach ist, wenn anschliessend beim Herstellungsvorgang des Isolierkörpers die Elektrode in diesen eingebettet wird.

Die elektrisch leitende Verbindung mit der Elektrode kann in verschiedener Weise ausgebildet sein. Beispielsweise kann eine Verbindungsleitung bis an die Elektrode herangeführt sein und dabei auch in den Ringkörper eindringen, wodurch eine auch mechanisch belastbare Verbindung gebildet wird.

Man kann aber auch den Ringkörper auf der Seite der Ringschulter mit einem elektrisch leitend mit der Elektrode verbundenen Kontakt versehen, an den ein Gegenkontaktstück angedrückt wird. Eine derartige Verbindung ist vor allem bei einer Ausbildung der Garnitur als Kabelstecker vorteilhaft, da hier in der Regel auf den Isolierkörper eine in axialer Richtung wirkende Kraft ausgeübt wird, die dann zur Erzielung des Kontaktdruckes genutzt werden kann. Der Kontakt des Ringkörpers kann dabei durch eine elektrisch leitende Schicht gebildet sein.

Bei einer Ausbildung der Garnitur als Kabelendverschluss ist es, sofern der Kabelendverschluss für eine Freiluftanlage bestimmt ist, zweckmässig, die Elektrode und/oder den Ringkörper im Abstand von der durch die Schulter definierten Fläche anzuordnen und die den freien Raum der Ringnut radial nach aussen begrenzende Werkstoffpartie als Tropflippe auszubilden. In der Regel brauchen dann keine weiteren Massnahmen zum Schutze der Elektrode vor Feuchtigkeit getroffen zu werden.

Bei einer Ausbildung der Garnitur als Kabelstecker mit einem gegen die Ringschulter drückenden, hohlzylindrischen Druckstück und einer dieses belastenden Feder kann man zwischen den Kontakt am Ringkörper und das Druckstück ein Kontaktelement einklemmen und von diesem die Anschlussleitung in Richtung zur Feder wegführen. Der Aufwand für die Herstellung der elektrischen Verbindung zur Elektrode wird hierdruch auf ein Minimum gesenkt. Zur Kontaktverbesserung kann das Kontaktelement Kontaktschneiden oder Kontaktspitzen aufweisen. Die Anschlussleitung kann beispielsweise zwischen dem Isolierkörper einerseits und dem Druckstück sowie der Feder andererseits zum einen Ende des Kabelsteckers geführt und hier herausgeführt werden. Man kann aber auch die Feder als Teil der leitenden Verbindung zwischen der Elektrode und der Anzeigevorrichtung ausbilden.

Im folgenden ist die Erfindung anhand von zwei in der Zeichnung dargestellten Ausführungsbeispielen im einzelnen erläutert. Es zeigt:

Fig. 1 einen Längsschnitt eines ersten Ausführungsbeispiels in Form eines Kabelendverschlusses

Fig. 2 einen Längsschnitt eines zweiten Ausführungsbeispiels in Form eines Kabelsteckers.

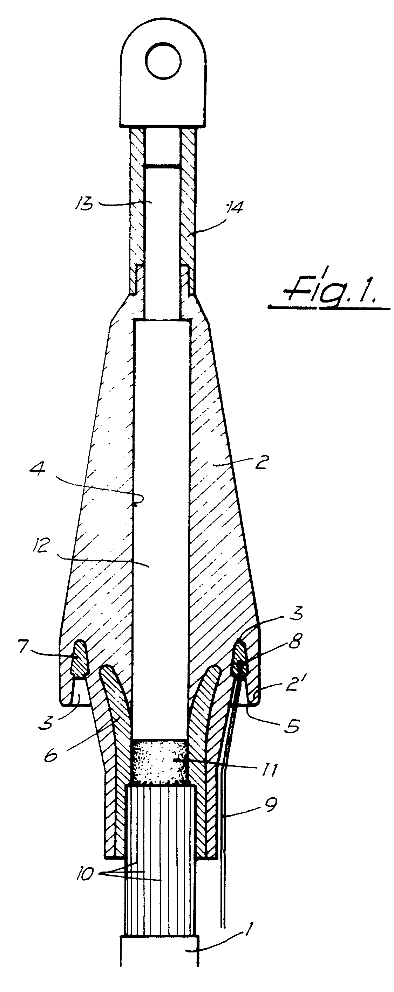

Ein Endverschluss für ein kunststoffisoliertes, beispielsweise PE-isoliertes Kabel 1 eines Mittelspannungs-Energieversorgungsnetzes weist einen aus Silikonkautschuk bestehenden Isolierkörper 2 auf, der, wie Fig. 1 zeigt, im Bereich seines Mittelabschnittes die äussere Form eines Kegelstumpfes hat. An das im Druchmesser grössere Ende des Mittelabschnittes schliesst sich eine zylindrische Zone an, die jedoch ebenfalls eine Kegelform aufweisen könnte. In dieser Zone liegt eine Ringnut 3, die konzentrisch einen zentralen Längskanal 4 umgibt, welcher den Isolierkörper 2 in axialer Richtung auf dessen gesamter Länge durchdringt. Wie Fig. 1 ferner zeigt, ist die Ringnut 3 zu einer Ringschulter 5 hin offen, die am Übergang von der zylindrischen Zone des Isolierkörpers 2 zu dessen am Kabelende abgekehrten, im Durchmesser kleineren Endabschnitt gebildet wird, der sich an die innere Flanke der Ringnut 3 anschliesst und sich zu dem von ihm gebildeten Ende hin zunächst konisch verjüngt und dann in einen zylindrischen Bereich übergeht. Dieser Endabschnitt enthält zum Zwecke der Feldabsteuerung einen Deflektor 6 mit einem Kern aus demselben Material wie der Isolierkörper 2 und einer elektrisch leitenden Schicht auf der Oberfläche des Kerns.

Der Deflektor 6 hat, wie Fig. 1 zeigt, die Form einer Hülse, die sich vom freien Ende des sich an die Ringschulter 5 anschliessenden Endabschnittes durch diesen Abschnitt hindurch bis in die die Ringschulter bildende, zylindrische Zone hinein erstreckt und im konischen Bereich des Endabschnittes sowie in der zylindrischen Zone trichterförmig erweitert ist. Dieses trichterförmige Ende liegt in radialem Abstand innerhalb der Ringnut 3, die sich in axialer Richtung noch über das Deflektorende hinaus in den Isolierkörper 2 hinein erstreckt.

In der Ringnut 3 liegt ein aus demselben Material wie der Isolierkörper 2 bestehender Ringkörper 7, dessen Querschnittsform an die Querschnittsform der Ringnut angepasst ist, die er jedoch nur etwa zur Hälfte, gemessen in Richtung der Tiefe der Ringnut, ausfüllt. Der Ringkörper 7, der bei der Herstellung des Isolierkörpers 2 in diesen eingebettet wird und beim Herstellungsvorgang durch den von ihm nicht ausgefüllten Teil der Ringnut hindurch in der richtigen Position gehalten wird, trägt auf seiner Aussenseite eine elektrisch leitende Schicht, die eine nach der Montage kapazitiv an das Kabel angekoppelte, dieses konzentrisch umgebende, ringförmige Elektrode 8 bildet. Die die Elektrode bildende leitende Schicht wird auf den Ringkörper 7 aufgebracht, ehe er in das Material des Isolierkörpers 2 beim Fertigungsvorgang eingebettet wird. Wie Fig. 1 zeigt, beginnt zwar die Elektrode 8 in einer das trichterförmige Ende des Deflektors 6 umgebenden Zone. Sie steht aber in axialer Richtung über den Deflektor 6 über und liegt daher teilweise in einem Bereich, in dem das Feld nicht mehr von dem Deflektor 6 bestimmt wird. Von der Ringschulter 5 her ist in die Ringnut 3 eine isolierte Anschlussleitung 9 eingeführt, die im Ringkörper 7 endet und hier mittels eines elektrisch leitenden Kontaktplättchens oder dgl. elektrisch leitend mit der Elektrode 8 verbunden ist. Die Einführung der Anschlussleitung 9 in den Ringkörper 7 trägt zu einer auch mechanisch belastbaren Verbindung bei. Eine Verengung der Ringnut 3, die das der Ringschulter 5 zugekehrte Ende des Ringkörpers 7 etwas übergreift, hält auch bei mechanischer Beanspruchung den Ringkörper 7 in seiner in Fig. 1 dargestellten Lage.

Für die Montage des Endverschlusses wird der mit dem Endverschluss zu versehende Endabschnitt des Kabels 1 von seiner Ummantelung befreit. Die dann freiliegenden Abschirmdrähte 10 sind zurückgebogen und die leitende Schicht 11 auf der Aussenmantelfläche der Kunststoffisolation 12 bis auf einen über die gebogenen Abschirmdrahtenden etwas überstehenden Abschnitt entfernt. Ausserdem wird die Kunststoffisolation 12 auf der für die Kontaktierung erforderlichen Länge entfernt. Nun wird der Isolierkörper 2 vom abisolierten Kabelende her auf das Kabel soweit aufgeschoben, bis eine vom Deflektor 6 gebildete Schulter an den umgebogenen Abschirmdrahtenden anstösst. Die leitende Schicht des Deflektors 6 liegt dabei elektrisch leitend sowohl an den Abschirmdrähten 6 als auch an der sich noch auf der Kunststoffisolation 12 befindenden, leitenden Schicht 11 an. Da der Durchmesser des zentralen Längskanals 4 des Isolierkörpers 2 auf den Aussendurchmesser der Kunststoffisolation 12 abgestimmt ist, liegt der Isolierkörper 2 an letzterer dicht an. Hierdurch wird die erforderliche elektrische Festigkeit in Längsrichtung erzielt.

Zur elektrischen und mechanischen Verbindung mit der Seele 13 des Kabels 1 dient im Ausführungsbeispiel eine Verbindungshülse 14, die den ihr zugekehrten, im Ausführungsbeispiel zylindrischen Endabschnitt des Isolierkörpers 2 übergreift, so dass bei dem Verpressen der Verbindungshülse 14 nicht nur die Seele 13 fest erfasst wird, sondern auch der in die Verbindungshülse eingreifende Endabschnitt des Isolierkörpers 2 dicht an die Seele 13 angedrückt wird.

Die die Ringnut 3 nach aussen hin begrenzende Werkstoffpartie des Isolierkörpers 2 ist als eine Tropflippe 2' ausgebildet, um die Elektrode 8 gegen den Zutritt von Wasser zu schützen. Die Anschlussleitung 9 ist zu einer nicht dargestellten Prüf- oder Kontrolleinrichtung oder zu einem Anschluss einer solchen geführt. Infolge der kapazitiven Ankopplung der Elektrode 8 an das Kabel 1 ist das Potential der Elektrode 8 gegenüber Erde repräsentativ für den Spannungszustand des Kabels 1.

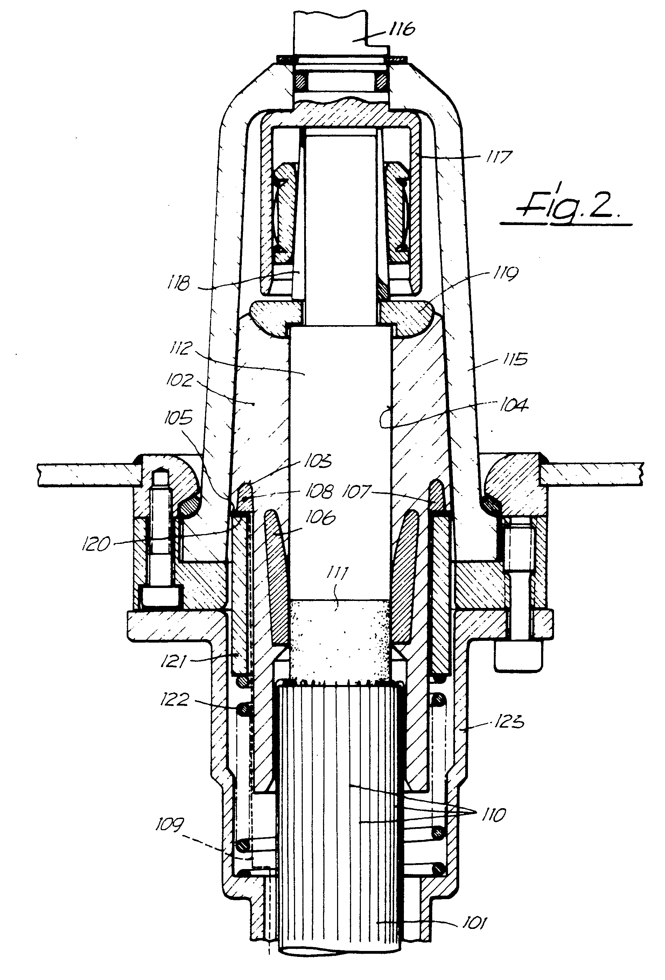

Der in Fig. 2 dargestellte Kabelstecker für ein Kabel 101, bei dem es sich wie bei dem Kabel 1 des ersten Ausführungsbeispiels um ein kunststoffisoliertes Mittelspannungskabel eines Energieversorgungsnetzes handelt, ist in eine Steckbuchse einsteckbar, die einen aus Isolierstoff bestehenden, becherartigen Buchsenkörper 115 aufweist, der im Ausführungsbeispiel in eine Öffnung in einer Wand eines Gehäuses, beispielsweise eines Schaltergehäuses, gasdicht eingesetzt ist. Den Boden des Buchsenkörpers 115 durchdringt, ebenfalls gasdicht, ein Verbindungsbolzen 116, der einstückig mit der im Inneren des Buchsenkörpers 115 angeordneten Steckbuchse 117 ausgebildet ist. Der Buchsenkörper 115 erweitert sich konisch zu seinem offenen Ende hin.

Der Kabelstecker weist einen radial federnden Steckkontaktkörper 118 auf, der unmittelbar auf das abisolierte Ende des Kabels 101 aufgesetzt ist und zusammen mit diesem in die Steckbuchse 117 eingeführt wird.

Wie Fig. 2 zeigt, stützt sich am Steckkontaktkörper 118 ein ringförmiger Druckkörper 119 ab, welcher das Ende der freigelegten Kunststoffisolation 112 des Kabels übergreift und eine Anlagefläche für einen Isolierkörper 102 bildet, der im Ausführungsbeispiel aus Silikonkautschuk besteht und mit einem zentralen Längskanal 104 versehen ist, der den Isolierkörper 102 auf seiner gesamten Länge durchdringt. Der am Druckkörper 119 anliegende Abschnitt des Isolierkörpers 102 hat eine konische Aussenform und ist an den Buchsenkörper 115 angepasst, um ebenso wie an der Kunststoffisolation 112 des Kabels 101 auch am Buchsenkörper 115 dicht anzuliegen und dadurch den Buchsenkörper elektrisch dicht zu verschliessen.

Wie Fig. 2 zeigt, geht der konische Abschnitt des Isolierkörpers 102 unter Bildung einer Ringschulter 105 in einen zylindrischen, im Durchmesser kleineren Abschnitt über, der einen in ihn eingebetteten Deflektor 106 umgibt, welcher wie der Deflektor 6 ebenfalls aus Silikonkautschuk besteht und eine elektrisch leitende Schicht trägt. Der Deflektor 106, der sich gegen den Steckkontaktkörper 118 hin trichterförmig erweitert, liegt mit seinem im Durchmesser kleineren Teil an der Kunststoffisolation 112 und dem nicht entfernten Rest der diese Isolation normalerweise umgebenden leitenden Schicht 111 an. Wie Fig. 2 zeigt, erstreckt sich bei diesem Ausführungsbeispiel der Deflektor 106 nicht bis zum kabelseitigen Ende des Isolierkörpers 102, sondern endet im Bereich der leitenden Schicht 111. Der Isolierkörper 102 übergreift jedoch auch noch die nach hinten geführten Abschirmdrähte 110 des Kabels auf einem Teil ihrer Länge.

Von der Ringschulter 105 aus dringt in den Isolationskörper 102 eine konzentrisch zum zentralen Längskanal 104 liegende Ringnut 103 ein, die vollständig von einem Ringkörper 107 ausgefüllt ist, der eine elektrisch leitende Schicht trägt, welche die Elektrode 108 bildet. Da die Elektrode 108 in axialer Richtung des Kabelsteckers gegen den Steckkontaktkörper hin über den Deflektor 106 übersteht, ist sie wie beim ersten Ausführungsbeispiel kapazitiv mit der Kabelseele gekoppelt. An der in der Fläche der Ringschulter 105 liegenden, ebenfalls die metallische Schicht tragenden Seite des Ringkörpers 107 liegt eine Kontaktscheibe 120 an, die zur Kontaktverbesserung beidseitig mit Zähnen oder Schneiden versehen ist. Die Kontaktscheibe 120 wird gegen den Ringkörper 107 von einem rohrförmigen Druckstück 121 aus elektrisch isoliertem Kunststoff gedrückt, das längsverschiebbar den zylindrischen Abschnitt des Isolierkörpers 102 umgibt. An der dem Körper 107 abgekehrten Seite des Druckstückes 121 liegt eine vorgespannte Schraubenfeder 122 an, die sich andererseits an einer über das Kabel geschobenen, metallischen Kappe 123 abstützt, welche mittels Schrauben gegen den Buchsenkörper 115 und die diesen tragende Wand gedrückt wird. Die Schraubenfeder erzeugt den Druck, der erforderlich ist, um eine dichte Anlage des Isolierkörpers 102 an der Kunststoffisolation 112 und am Buchsenkörper 115 zu gewährleisten.

Zwischen die Kontaktscheibe 120 und das Druckstück 121 ist das blanke Ende einer Verbindungsleitung gelegt, die zwischen dem Isolierkörper 102 einerseits sowie dem Druckkörper 119 der Schraubenfeder 122 andererseits hindurchgeführt und dann zwischen dem Kabel und der Kappe 123 aus dem Stecker herausgeführt ist. Die Anschlussleitung 109 führt zu einer Anschlussvorrichtung für ein Prüf- und Überwachungsgerät oder ist unmittelbar mit diesem verbunden. Der von der Schraubenfeder 122 erzeugte axiale Schub gewährleistet eine gute elektrische Verbindung zwischen der Anschlussleitung 109 und der Kontaktscheibe 120 sowie der Elektrode 108. Man kann aber selbstverständlich auch die Feder zur Potentialabnahme von der Elektrode 108 heranziehen, so dass nicht darauf geachtet werden muss, dass die Anschlussleitung nicht von der Schraubenfeder eingeklemmt und eventuell abgequetscht wird.

Wie bei dem Ausführungsbeispiel gemäss Fig. 1 bereitet die Fertigung des Isolierkörpers 102 keine Schwierigkeiten, da der Ringkörper 107 von der Seite der Ringschulter her während des Herstellungsprozesses ohne Schwierigkeiten in der richtigen Position gehalten werden kann. Der Isolationskörper 102 kann daher bei gleichzeitiger Einbettung der Elektrode 108 und des Deflektors 106 in einem Arbeitsgang hergestellt werden.

Die Montage des Kabelsteckers erfolgt in der Weise, dass über das für die Montage vorbereitete, also im erforderlichen Umfange freigelegte und abisolierte Kabelende zunächst die Kappe 123 und dann zusammen mit dem Isolierkörper 102 das Druckstück 121 und die Schraubenfeder 122 geschoben werden. Danach wird der Druckkörper 119 und der Steckkontaktkörper 118 aufgeschoben. Die Anschlussleitung 109, deren eines Ende zwischen die Kontaktscheibe 120 und das Druckstück 121 eingeklemmt wird, wird in der bereits erwähnten Weise aus dem Kabelstecker herausgeführt. Selbstverständlich könnte die Anschlussleitung 109 in der gleichen Weise wie bei dem Ausführungsbeispiel gemäss Fig. 1 mit der Elektrode 108 verbunden werden. Die Kontaktierung unter Zuhilfenahme des von der Schraubenfeder 122 erzeugten Anpressdruckes ist jedoch einfacher herzustellen.

**Patentansprüche**

1. Garnitur für das Ende eines Mittelspannungs- oder Hochspannungskabels (1) mit einem das Kabel umfassenden Isolierkörper (2), der eine gegenüber einem gegebenenfalls vorhandenen Deflektor (6) elektrisch isolierte, ringförmig ausgebildete Elektrode (8) für den Anschluss einer Prüf- oder Überwachungseinrichtung enthält, dadurch gekennzeichnet, dass die Elektrode (8; 108) in einer von einer Ringschulter (5; 105) des Isolierkörpers (2; 102) aus in Längsrichtung eines zentralen Längskanals (4; 104) in den Isolierkörper (2; 102) eindringenden Nut (3; 103) liegt.

2. Garnitur nach Anspruch 1, dadurch gekennzeichnet, dass die Elektrode (8;108) zumindest teilweise in einem nach aussen vom Deflektor (6;106) nicht abgeschirmten Bereich angeordnet ist.

3. Garnitur nach einem der Ansprüche 1 oder 2, dadurch gekennzeichnet, dass der Innendurchmesser der Elektrode (8;108) grösser ist als der grösste Aussendurchmesser des Deflektors (6;106).

4. Garnitur nach einem der Ansprüche 1 bis 3, dadurch gekennzeichnet, dass die Elektrode (8;108) durch eine elektrisch leitende Schicht gebildet wird, die an der Wandung der Ringnut (3;103) anliegt.

5. Garnitur nach einem der Ansprüche 1 bis 4, dadurch gekennzeichnet, dass die Elektrode (8;108) zwischen der Wandung der Ringnut (3;103) und einem die Ringnut zumindest teilweise ausfüllenden Ringkörper (7;107) liegt, dessen Querschnittsform an die Querschnittsform der Ringnut angepasst ist.

6. Garnitur nach Anspruch 5, dadurch gekennzeichnet, dass der Ringkörper (7;107) auf der Seite der Ringschulter einen elektrisch leitend mit der Elektrode (8;108) verbundenen Kontakt trägt.

7. Garnitur nach Anspruch 6, dadurch gekennzeichnet, dass der Kontakt durch eine elektrisch leitende Schicht gebildet ist.

8. Garnitur nach Anspruch 6 oder 7, dadurch gekennzeichnet, dass die Elektrode (8) und/oder der Ringkörper (7) im Abstand von der durch die Ringschulter (5) definierten Fläche liegen und die den freien Raum der Ringnut (3) radial nach aussen begrenzende Werkstoffpartie als Tropflippe ausgebildet ist.

9. Garnitur nach einem der Ansprüche 1 bis 7, dadurch gekennzeichnet, dass bei einer Ausbildung als Kabelstecker mit einem gegen die Ringschulter (105) drückenden, hohlzylindrischen Druckstück (121) und einer dieses belastenden Feder (122) zwischen den Kontakt am Ringkörper (107) und das Druckstück (121) ein Kontaktelement (120) eingeklemmt ist und dass von diesem Kontaktelement ein mit ihm in elektrisch leitender Verbindung stehender Leiter (109) in Richtung zur Feder (122) weggeführt ist.

10. Garnitur nach Anspruch 9, dadurch gekennzeichnet, dass das Kontaktelement (120) Kontaktschneiden oder Kontaktspitzen aufweist.

11. Garnitur nach Anspruch 9 oder 10, dadurch gekennzeichnet, dass der Leiter (109) zwischen dem Isolierkörper (102) einerseits und dem Druckstück (121) sowie der Feder (122) andererseits nach aussen geführt ist.

12. Garnitur nach Anspruch 9 oder 10, dadurch gekennzeichnet, dass die Feder als Teil der leitenden Verbindung zwischen der Elektrode (108) und der Anzeigevorrichtung ausgebildet ist.

**Revendications**

1. Garniture pour l'extrémité d'un câble moyenne tension ou haute tension, comprenant un corps isolant entourant le câble, qui renferme une électrode configurée en forme d'anneau, pour le raccordement d'un dispositif de contrôle ou de surveillance, qui est isolée électriquement par rapport à un déflecteur éventuellement présent, caractérisée en ce que l'électrode (8; 108) se trouve dans une rainure (3; 103) qui s'enfonce dans le corps isolant (2; 102) en partant d'un épaulement annulaire (5; 105) du corps isolant (2; 102), dans la direction longitudinale d'un canal longitudinal central (4; 104).

2. Garniture suivant la revendication 1, caractérisée en ce que l'électrode (8; 108) est disposée au moins partiellement dans une région qui n'est pas protégée vers l'extérieur par le déflecteur (6; 106).

3. Garniture suivant l'une des revendications 1 ou 2, caractérisée en ce que le diamètre intérieur de l'électrode (8; 108) est plus grand que le diamètre extérieur maximum du déflecteur (6; 106).

4. Garniture suivant l'une des revendications 1 à 3, caractérisée en ce que l'électrode (8; 108) est formée par une couche électriquement conductrice qui est appliquée contre la paroi de la rainure annulaire (3; 103).

5. Garniture suivant l'une des revendications 1 à 4, caractérisée en ce que l'électrode (8; 108) se trouve entre la paroi de la rainure annulaire (3; 103) et un corps annulaire (7; 107) qui remplit au moins partiellement la rainure annulaire et dont la forme de section est adaptée à la forme de section de la rainure annulaire.

6. Garniture suivant la revendication 5, caractérisée en ce que le corps annulaire (7; 107) porte sur le côté de l'épaulement annulaire un contact relié à l'électrode (8; 108) par une liaison électriquement conductrice.

7. Garniture suivant la revendication 6, caractérisée en ce que le contact est formé par une couche électriquement conductrice.

8. Garniture suivant la revendication 6 ou 7, caractérisée en ce que l'électrode (8) et/ou le corps annulaire (7) se trouve à distance de la surface définie par l'épaulement annulaire (5) et la partie de matière qui délimite l'espace libre de la rainure annulaire (3) radialement vers l'extérieur est configurée en forme de lèvre formant gouttière.

9. Garniture suivant l'une des revendications 1 à 7, caractérisée en ce que, dans le cas où elle est constituée par une fiche de câble comprenant une pièce de pression (121) cylindrique creuse qui exerce une pression contre l'épaulement annulaire (105) et un ressort (122) qui charge cette pièce de pression, un élément de contact (120) est serré entre le contact formé sur le corps annulaire (107) et la pièce de pression (121) et en ce que, de cet élément de contact, part, en direction du ressort (122), un conducteur (109) qui est en liaison électriquement conductrice avec cet élément.

10. Garniture suivant la revendication 9, caractérisée en ce que l'élément de contact (120) présente des arêtes de contact ou des pointes de contact.

11. Garniture suivant la revendication 9 ou 10, caractérisée en ce que le conducteur (109) est conduit vers l'extérieur entre le corps isolant (102) d'une part et la pièce de pression (121) et le ressort (122) d'autre part.

12. Garniture suivant la revendication 9 ou 10, caractérisée en ce que le ressort constitue une partie de la liaison conductrice entre l'électrode (108) et le dispositif indicateur.

## Claims

1. Fitting for the end of a medium voltage or high voltage cable, comprising an insulating body which surrounds the cable and contains an annular electrode for the connection of a testing or minitoring device, which electrode is elektrically insulated from a deflector optionally present, characterised in that the electrode (8;108) lies in a groove (3;103) penetrating the insulating body (2;102) from an annular shoulder (5;105) of the insulating body (2;102) in the longitudinal direction of a central longitudinal channel (4;104).

2. Fitting according to Claim 1, characterised in that the electrode (8;108) is arranged at least partly in a region which is not shielded off against the outside by the deflector (6;106).

3. Fitting according to one of the Claims 1 or 2, characterised in that the internal diameter of the electrode (8;108) is greater than the greatest external diameter of the deflector (6;106).

4. Fitting according to one of the Claims 1 to 3, characterised in that the electrode (8;108) is formed by an electrically conductive layer which lies against the wall of the annular groove (3;103).

5. Fitting according to one of the Claims 1 to 4, characterised in that the electrode (8;108) lies between the wall of the annular groove (3;103) and an annular body (7;107) which at least partly fills the annular groove and the cross sectional form of which is adapted to the cross sectional form of the annular groove.

6. Fitting according to Claim 5, characterised in that the annular body (7;107) carries a contact on the side of the annular shoulder, which contact is electrically conductively connected with the electrode (8;108).

7. Fitting according to Claim 6, characterised in that the contact is formed by an electrically conductive layer.

8. Fitting according to Claim 6 or 7, characterised in that the electrode (8) and/or the annular body (7) lie at a distance from the surface defined by the annular shoulder (5), and that the portion of material which forms the radially external boundary to the free space of the annular groove (3) is in the form of a drip lip.

9. Fitting according to one of the Claims 1 to 7, characterised in that when the fitting is designed as a cable plug having a hollow cylindrical thrust member (121) pressing against the annular shoulder (105) and loaded by a spring (122), a contact element (120) is clamped between the contact on the annular body (107) and the thrust member (121), and in that a conductor (109) which is in electrically conductive connection with this contact element extends from said contact element in the direction towards the spring (122).

10. Fitting according to Claim 9, characterised in that the contact element (120) has contact blades or contact points.

11. Fitting according to Claim 9 or 10, characterised in that the conductor (109) is led outwards between the insulating body (102) on the one hand and the thrust member (121) and spring (122) on the other hand.

12. Fitting according to Claim 9 or 10, characterised in that the spring is formed as part of the conductive connection between the electrode (108) and the indicator device.

_Fig.1._

Fig.2.